Europäisches Patentamt

(19) European Patent Office

Office européen des brevets

(11) Publication number: **0 250 692**
**B1**

(12) EUROPEAN PATENT SPECIFICATION

(45) Date of publication of the patent specification:
14.06.89

(51) Int. Cl.⁴: **B60T 8/44**

(21) Application number: 86830167.2

(22) Date of filing: 16.06.86

(54) Bi-fluidic brake actuator for a vehicule braking circuit.

| | |
|---|---|
| (43) Date of publication of application:<br>07.01.88 Bulletin 88/1 | (73) Proprietor: **BENDIX ITALIA S.p.A., Via Cavalli 53 A**<br>**Casella Postale 66, I-26013 Crema(IT)** |
| (45) Publication of the grant of the patent:<br>14.06.89 Bulletin 89/24 | (72) Inventor: **Cadeddu, Leonardo, Via Stazione 23,**<br>**Crema(IT)** |
| (84) Designated Contracting States:<br>DE FR GB IT SE | (74) Representative: **Timoney, Ian Charles Craig et al,**<br>**BENDIX FRANCE Division Technique Service Brevets**<br>**Bendix Europe 126, rue de Stalingrad,**<br>**F-93700 Drancy(FR)** |
| (56) References cited:<br>GB-A- 2 141 195<br>US-A- 4 365 538<br><br>PATENT ABSTRACTS OF JAPAN, vol. 7,<br>no. 98 (M-210)[1243], 26th April 1983 | |

ACTORUM AG

## Description

The present invention relates to a bi-fluidic brake actuator for a vehicle braking circuit and, more particularly, to a brake circuit including a hydro-pneumatic actuator for use with an anti-skid braking system.

In the majority of anti-skid braking systems electrohydraulic valves are used to control the hydraulic pressure applied to the vehicle wheels during braking. The valves are linked to a sensing circuit which determines the speed of the wheel which is being braked. If the wheel locks a signal is sent to the electro-hydraulic valve causing it to decrease the hydraulic pressure applied to the wheel brake. The brake circuit also generally includes a hydraulic booster actuated by the brake pedal and connected to a source of high pressure fluid. When the wheel being braked starts to turn again the sensing circuit causes the electro-hydraulic valve to send fluid under pressure from the booster to the brakes and thus recommence braking.

A braking system of the type described above is, however, complex and costly due to the number of specialised components which it requires. It is therefore an object of the invention to provide a bi-fluidic brake actuator for a vehicle braking circuit which is adapted for use in an anti-skid mode, which is simple and which uses readily available components of conventional design.

In certain previously proposed anti-skid braking circuits the conditions existing at the time the anti-skid circuit begins to operate can undesirably affect the subsequent operation of the circuit. This can result in a non-linear relationship between the anti-skid control signal and the pressure in the braking circuit. It is therefore a further object of the present invention to provide an anti-skid braking system in which the relationship between the anti-skid control signal and the pressure in the braking circuit is essentially linear.

According to a first aspect of the invention there is provided a bi-fluidic brake actuator for a vehicle brake circuit, comprising a closed shell divided into first and second chambers by diaphragm means, means adapted to selectively create a pressure differential across the diaphragm means, the diaphragm means being connected to a first valve means for controlling the pressure of fluid in the brake circuit characterized in that the actuator further comprises piston means slideably mounted in a bore in fluid communication with the brake circuit and selectively displaceable by the diaphragm means to increase the fluid pressure in the circuit beyond an initial level.

According to a second aspect of the present invention there is provided an anti-skid braking system for a vehicle comprising a bi-fluidic brake actuator and further comprising sensing means for determining the speed of rotation of a vehicle wheel, electronic processor and actuator means linked to the sensing means, electromagnetic valve means in a fluid passage between a fluid pressure generator and a vehicle brake and actuatable by the processor and actuator means to selectively interrupt the fluid passage between the brake and the generator and open a fluid passage between the brake and the brake actuator.

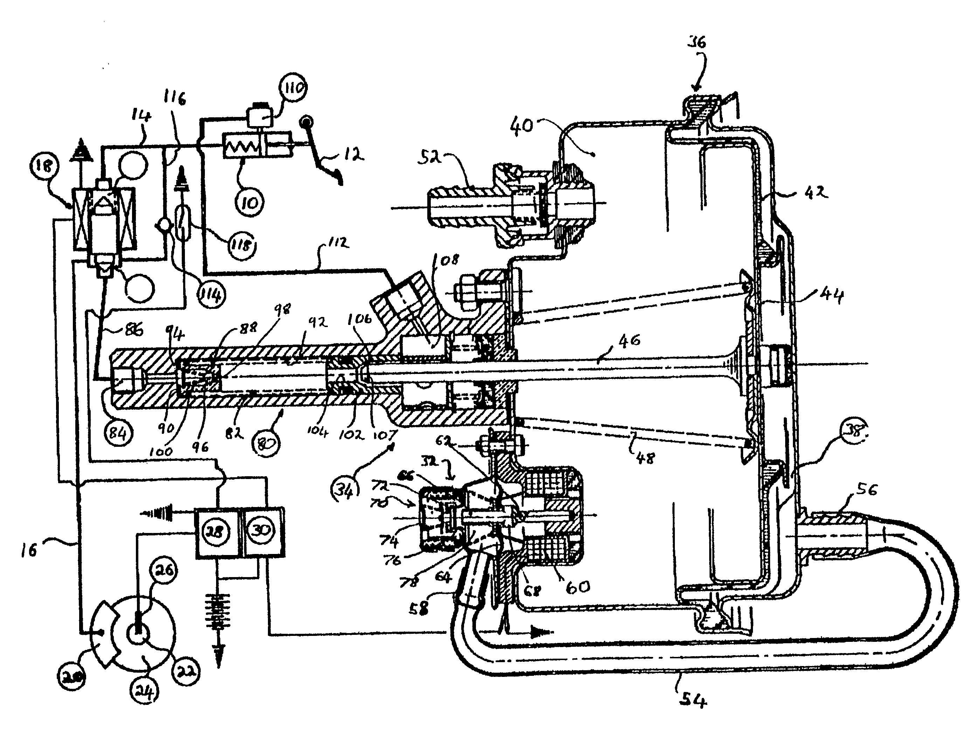

One embodiment of the present invention will now be described by way of example with reference to the accompanying drawings, in which the sole figure is a schematic layout of a vehicle brake system including a bifluidic brake actuator according to the present invention.

As shown in the figure, the vehicle brake system comprises a master cylinder 10 adapted to be actuated by a vehicle brake pedal 12. The master cylinder, in the example shown, is a conventional, hydrostatic master cylinder but it is envisaged that a hydrodynamic or assisted brake booster may be used. When the master cylinder is operated fluid under pressure passes along brake lines 14 and 16 by way of an electromagnetic three way valve assembly 18 (which will be described below in greater detail) to disc brake 20. The disc brake 20 comprises a toothed, or phonic wheel 22 mounted on the brake disc 24 adjacent to which is mounted an inductive sensor 26 to determine the speed of rotation of the vehicle wheel (not shown). Signals from the inductive sensor 26 are analysed by an electronic processor 28 which is connected to an electric actuator 30. If the inductive sensor 26 determines that its associated wheel has locked during a braking operation, the electronic processor 28 causes the electric actuator 30 to send a control signal, in a first instance, to the electromagnetic valve 18.

The bi-fluidic actuator which, in the example shown, is a hydro-pneumatic brake actuator 34 comprises a vacuum shell 36 which is divided into first and second actuator chambers 38 and 40 by a flexible diaphragm 42. The flexible diaphragm 42 supports a disc 44 to which is secured one end of a push rod 46. The flexible diaphragm 42 and disc 44 are urged to the right, when viewing the drawings, by a helical spring 48, mounted in the actuator shell 36. The second actuator chamber 40 includes a vacuum check valve 52 intended to be connected to a vacuum source such as the engine inlet manifold (not shown). The first and second actuator chambers 38 and 40 are interconnected by a connecting pipe 54, one end 56 of which opens into the first chamber 38 and the other end 58 is connected to the second chamber 40 by way of an electromagnetic valve 32.

The electromagnetic valve 32 comprises a solenoid 60 which is actuatable in response to signals from the electric actuator 30 to displace piston 62 to the left, when viewing the drawings. Piston 62 is slideably and sealingly received in a diaphragm 64 and comprises a longitudinal bore 66 which opens into the interior of the second chamber 40 by way of a lateral opening 68 and a passage through the solenoid 60. In the illustrated rest position the two actuator chambers 38 and 40 are interconnected by way of pipe 54, the interior of electromagnetic valve 32 and the longitudinal bore 66 through piston 62. The electromagnetic valve 32 comprises a pneumatic valve 70 adapted to be operated by the displacement of piston 62. The pneumatic valve 70 comprises a disc shaped valve member 72 which is urged to the right by a spring 74 against an annular valve seat 76. The interior of the electromagnetic valve 32 forms a valve chamber 78 which is isolated from the atmosphere by valve member 72 when it is in its rest position on valve seat 76. When the solenoid 60 of the electromagnetic valve 32 is energised the piston 62 moves to the left and its open end abuts valve member 72 and thus closes the passage between the first and second actuator chambers 38 and 40. Further movement of the piston 62 to the left lifts valve member 72 from its seat 76 and permits atmospheric air to pass through valve chamber 78 and pipe 54 to the first actuator chamber 38 while the second chamber 40 remains isolated.

The actuator 34 further comprises a body 80 in which is defined a longitudinal bore 82, one end of which communicates by an outlet 84 and a pipe 86 with the three-way valve 18. The fluid passage between the bore 82 and the outlet 84 is normally closed by a valve assembly 88 which comprises an annular seal 90. The valve assembly 88 is urged by a spring 92 against an annular shoulder 94 at an end of bore 82 and the annular seal 90 cooperates with the annular shoulder 94 to close the fluid passage between the bore 82 and the outlet 84. The valve assembly 88 further comprises a ball valve 96 which is urged against its seat 98 by a spring 100. The ball valve 96 may be opened by a predetermined pressure in bore 82 to permit fluid passage between the bore 82 and the outlet 84.

A piston 102 is slideably and sealingly mounted in the bore 82 of body 80 and comprises a longitudinal stepped passageway 104 which includes an annular chamfered surface 106. The piston 102 is displaceable in the bore 82 under the effect of the push rod 46 which includes an annular chamfered end 107 which is intended to cooperate with the annular surface 106 to close the fluid passage between the bore 82 and a chamber 108 in the body 80 which is isolated from the actuator shell and is in permanent fluid contact with a low pressure reservoir 110 by way of pipe 112. The movement of the piston 102 to the right is limited by a perforated sleeve 109 which is fixedly mounted in chamber 108.

The brake system further comprises a one-way return valve 114 in a bypass pipe 116 between the valve 18 and pipe 14. A sensor 118 is provided adjacent the return valve 114 and is intended to produce an electronic signal in response to the opening of the valve 114.

The hydro-pneumatic actuator as described above operates as follows. When the vehicle engine is started a vacuum is applied to the second chamber 40 by way of check valve 52 and is consequently applied to the first chamber 38 by way of pipe 54. The flexible diaphragm 42 is thus subject to equal pneumatic pressure and is urged into its illustrated rest position by the spring 48 and. In the rest position the push rod 46 and the piston 102 are in their extreme rightward position and the hydraulic passage between brake lines 14 and 16 by way of the electromagnetic valve 18 is open. When the brakes of the vehicle are applied, in normal braking conditions, fluid under pressure passes from master cylinder 10 to the disc brake 20 by way of brake lines 14 and 16 and the valve 18.

In the event that a wheel of the vehicle, on which the above braking system is fitted, locks during braking the anti-skid braking system comes into operation. The inductive sensor 26 detects the locking of the wheel and the electronic processor 28 causes the electric actuator 30, in a first instance, to actuate the electromagnetic valve 18 to close the fluid passage between brake lines 14 and 16 and to open the fluid passage between brake line 16 and pipe 86. At this point the master-cylinder 10 is isolated from the vehicle brake 20 with the result that an increase in pressure on brake pedal 12 will have no effect on the pressure at the brake 20.

The brake pressure acting in pipe 86 exerts a force on valve assembly 88 which is greater than that exerted by spring 92 and the assembly 88 moves away from the annular shoulder 94. The force of spring 92 is chosen so as to be less than minimum braking pressure necessary to produce wheel lock in the most slippery road conditions. Thus in any given conditions, in the event of wheel lock, the valve assembly will move under the effect of fluid pressure to open the fluid passage between pipe 86 and bore 82. The fluid under pressure in bore 82 passes through passage 104 to the reservoir 110. The resulting pressure drop in line 16 and at brake 20 causes the wheel to start to turn again.

When the braking pressure has decreased a signal is sent to the solenoid 60 of electromagnetic valve 32, the electromagnetic valve 18 remaining in its activated position. The actuation of solenoid 60 causes the piston 62 to move to the left into contact with valve member 72 thus isolating the first chamber 36 from the second chamber 40. Further movement of piston 62 causes valve member 72 to lift from its seat 76 and allow atmospheric air to pass through valve chamber 78 and pipe 54 into the first chamber 38. The resulting pressure differential across the flexible diaphragm 42 causes the push rod 46 to move to the left so that chamfered end 107 abuts against the annular surface 106 thus closing the passage between the bore 82 and the reservoir 110. Further movement to the left of the flexible diaphragm 42 and the push rod 46 causes the piston 102 to move to the left and increase the fluid pressure in bore 82. As the valve assembly 88 has closed against annular shoulder 94 under the influence of spring 92, the counterpressure in pipe 86 having decreased, the increased fluid pressure in bore 82 causes the ball valve 96 to lift from its seat 98 and allow fluid under pressure to pass along pipe 86 and brake line 16 to the brake 20 thereby increasing the braking force on the wheel.

The pressure in the braking circuit 16 can thus be selectively increased by movement of push rod 46 and piston 102 up to a maximum pressure equal to that existing in the master cylinder 10.

Movement of the piston 62 can be selectively limited by controlled actuation of the solenoid 60 so that it adopts a lap position in which passage 66 is closed by valve member 72 but in which valve member 72 is still closed on its seat 76. In this position the pressure differential across diaphragm 64 is equal to that across the flexible diaphragm 42. The reaction acting to the right on piston 62 is therefore in proportion to the force exerted by the flexible diaphragm 42 and to the force generated by the solenoid.

The lap position gives a greater flexibility of operation to the actuator, allowing it to function with greater precision than would be allowed by a simple on/off function. Minor variations in the signal sent to the solenoid allow the actuator pressure, and thus the braking pressure, to be selectively increased or decreased by fractionally opening or closing the valve assembly 32. Thus controlled braking pressure modulation is allowed by controlled actuation of the solenoid into and out of the lap position. If the brake pedal is released while the anti-skid braking system is operating the fluid under pressure in line 16 and pipe 86 passes through the return valve 114 to the master cylinder 10. The sensor 118 detects the opening of return valve 114 and causes the electronic processor 28 to switch off the actuating signal to the electromagnetic valves 18 and 32 which then return to their rest positions. Thus, regardless of the state of operation of the anti-skid braking system, release of the brake pedal 12 will always produce a decrease in braking pressure.

When the inductive sensor 26 determines that the wheel has begun to turn again, the actuating signals to the electromagnetic valves 18 and 32 are switched off. The electromagnetic valve 18 reestablishes fluid communication between brake lines 14 and 16. The piston 62 returns to the right under the effect of spring 74 and spring 102 which acts against diaphragm 64. The return of piston 62 causes valve member 72 to close on its seat 76, interrupting the passage of air to the first chamber 38, and opens passage 66 which allows the vacuum in the second chamber 40 to be applied to first chamber 38. The flexible diaphragm 42 moves to the right under the effect of spring 48 and returns with the push rod 46 to their illustrated rest position. The piston 102 returns to its rest position under the effect of spring 92 with fluid from the reservoir 110 replenishing the bore 82 as required. Braking pressure is thus re-applied to the disc brake 20. If the wheel being braked locks again the anti-skid cycle described above is repeated.

An advantage of the present invention lies in the fact that the relationship between the pressure in the braking circuit and the electromagnetic field applied to the valve 32 is essentially linear.

Furthermore, with the present invention, the linear relationship between braking pressure and the applied electromagnetic field is not affected by the operating conditions existing at the time the anti-skid circuit comes into operation. It is envisaged that the device described could be modified for controlling a pneumatic braking circuit. This would necessitate an increase in the dimensions of piston 102 in order that its movement could produce the necessary change in braking pressure.

The actuator could also include a pressure responsive switch by means of which an indicator light could warn the vehicle driver of an decrease in the operating vacuum which would render the actuator unoperational.

While the actuator has been described with a vacuum operated mechanism for displacing the push rod 46 it is envisaged that the flexible diaphragm be displaced by high pressure air. In such a case, in the rest position, the first and second chambers 38 and 40 would be at atmospheric pressure. Alternatively differential hydraulic pressure could be used in the actuator to displace spool member 84.

Furthermore, as an alternative to selectively increasing the pressure in the first chamber 38 it is alternatively possible that the actuator be operated by selectively decreasing the pressure in the second chamber 40.

## Claims

1/ A bi-fluidic brake actuator for a vehicle brake circuit, comprising a closed shell (36) divided into first and second chambers (38,40) by a diaphragm means (42), means (32,54) adapted to selectively create a pressure differential across the diaphragm means (42), the diaphragm means (42) being connected to a first valve means (106,107) for controlling the pressure of fluid in the brake circuit characterised in that the actuator further comprises piston means (102,46) slideably mounted in a bore (82) in fluid communication with the brake circuit and selectively displaceable by the diaphragm means to increase the fluid pressure in the circuit beyond an initial level.

2/ Actuator as claimed in claim 1 characterised in that it further comprises a second valve means (90,94) in the bore (82) operable from a closed to an open position under the effect of fluid pressure in the brake circuit to allow passage of fluid from the circuit to the bore (82).

3/ Actuator as claimed in claims 1 or 2 characterised in that the piston means (102,46) is displaceable by way of a push rod (46) mounted on the diaphragm means (42), the first valve means (106,107) being formed by cooperating surfaces (106,107) respectively on the piston means (102) and the push rod (46).

4/ Actuator as claimed in any preceding claim characterized in that the brake circuit is connectable by way of the bore (82) to a low pressure fluid reservoir (110), the passage of fluid to the reservoir (110) being controlable by the first and second valve means (106,107 ; 90,94).

5/ Actuator as claimed in any one of claims 1 to 4 characterised in that it further comprises electromagnetic valve means (32) for selectively controlling the pressure differential across the diaphragm means (42).

6/ Actuator as claimed in any preceding claim characterised in that it further comprises third valve means (96,98) in the bore (82) and operable from a closed to an open position under the effect of fluid pressure in the bore (82) to allow the passage of fluid from the bore (82) to the brake circuit.

7/ Actuator as claimed in any one of claims 1 to 6 characterised in that the means for creating a pressure differential across the diaphragm means (42) comprise a vacuum source and atmospheric air.

8/ An anti-skid braking system for a vehicle comprising a bi-fluidic brake actuator as claimed in any one of claims 1 to 7 and further comprising sensing means (22,26) for determining the speed of rotation of a vehicle wheel, electronic processor and actuator means (28,30) linked to the sensing means (22,26), electromagnetic valve means (18) in a fluid passage between a fluid pressure generator (10) and a vehicle brake (20) and actuatable by the processor and actuator means (28,30) to selectively interrupt the fluid passage between the brake (20) and the generator (10) and open a fluid passage between the brake (20) and the brake actuator.

## Patentansprüche

1. Bifluidische Bremsbetätigungsvorrichtung für einen Fahrzeug-Bremskreis, mit einem geschlossenen Gehäuse (36), das von einer Membraneinrichtung (42) in eine erste und eine zweite Kammer (38, 40) unterteilt wird, Mitteln (32, 54) zum wahlweisen Erzeugen einer Druckdifferenz an der Membraneinrichtung (42), wobei die Membraneinrichtung (42) mit einer ersten Ventileinrichtung (106, 107) zur Steuerung des Strömungsmitteldrucks im Bremskreis verbunden ist, dadurch gekennzeichnet, daß die Betätigungsvorrichtung ferner eine Kolbeneinrichtung (102, 146) aufweist, die in einer Bohrung (82) in Strömungsverbindung mit dem Bremskreis gleitbar gelagert und durch die Membraneinrichtung wahlweise verschiebbar ist, um den Strömungsmitteldruck im Bremskreis über ein Anfangsniveau anzuheben.

2. Betätigungsvorrichtung nach Anspruch 1, dadurch gekennzeichnet, daß sie ferner eine zweite Ventileinrichtung (90, 94) in der Bohrung (82) aufweist, welche unter der Wirkung des Strömungsmitteldrucks im Bremskreis von einer Schließ- in eine Öffnungsstellung verstellbar ist, um den Durchtritt von Strömungsmittel aus dem Bremskreis in die Bohrung (82) zu ermöglichen.

3. Betätigungsvorrichtung nach Anspruch 1 oder 2, dadurch gekennzeichnet, daß die Kolbeneinrichtung (102, 146) mittels einer Schubstange (46) verschiebbar ist, die an der Membraneinrichtung (42) angebracht ist, wobei die erste Ventileinrichtung (106, 107) von zusammenwirkenden Flächen (106, 107) an der Kolbeneinrichtung (102) bzw. der Schubstange (46) gebildet wird.

4. Betätigungsvorrichtung nach einem der vorhergehenden Ansprüche, dadurch gekennzeichnet, daß der Bremskreis mittels der Bohrung (82) an einem Niederdruck-Strömungsmittelreservoir (110) anschließbar ist, wobei die Zufuhr von Strömungsmittel zum Reservoir (110) durch die erste und zweite Ventileinrichtung (106, 107; 90, 94) steuerbar ist.

5. Betätigungsvorrichtung nach einem der Ansprüche 1–4, dadurch gekennzeichnet, daß sie ferner eine elektromagnetische Ventileinrichtung (32) zur wahlweisen Steuerung des an der Membraneinrichtung (42) anliegenden Druckunterschiedes aufweist.

6. Betätigungsvorrichtung nach einem der vorhergehenden Ansprüche, dadurch gekennzeichnet, daß sie eine dritte Ventileinrichtung (96, 98) in der Bohrung (82) aufweist, die unter der Wirkung des Strömungsmitteldrucks in der Bohrung (82) von einer Schließ- in eine Öffnungsstellung verstellbar ist, um den Durchtritt von Strömungsmittel aus der Bohrung (82) zum Bremskreis zu ermöglichen.

7. Betätigungsvorrichtung nach einem der Ansprüche 1–6, dadurch gekennzeichnet, daß die Mittel zum Erzeugen eines an der Membraneinrichtung (42) anliegenden Druckunterschiedes eine Unterdruckquelle und atmosphärische Luft umfassen.

8. Antirutsch-Bremsanlage für ein Fahrzeug mit einer bifluidischen Brems-Betätigungsvorrichtung nach einem der Ansprüche 1–7, die ferner versehen ist mit einer Sensoreinrichtung (22, 26) zum Bestimmen der Drehgeschwindigkeit eines Fahrzeugrades, einer elektronischen Prozessor- und Betätigungsvorrichtung (28, 30), die mit der Sensoreinrichtung (22, 26) gekoppelt ist, einer elektromagnetischen Ventileinrichtung (18) in einer Strömungsverbindung zwischen einem Strömungsmitteldruckerzeuger (10) und einer Fahrzeugbremse (20), welche durch die Prozessor- und Betätigungseinrichtung (28, 30) betätigbar ist, um wahlweise die Strömungsverbindung zwischen der Bremse (20) und dem Druckerzeuger (10) zu unterbrechen und eine Strömungsverbindung zwischen der Bremse (20) und der Bremsbetätigungsvorrichtung zu öffnen.

## Revendications

1. Dispositif bifluide d'actionnement pour circuit de freinage d'un véhicule, comprenant une coquille (36) divisée en une première et une seconde chambres (38, 40) par un diaphragme (42) des moyens (32, 54) prévus pour créer des pressions différentes sur chacune des faces du diaphragme (42), le diaphragme (42) étant relié à une première valve (106, 107) pour commander la pression du fluide dans le circuit de freinage, caractérisé en ce que le dispositif d'actionnement comprend en outre un piston (102, 46) coulissant dans un alésage (82) communiquant avec le circuit de freinage et mobile sous l'action du diaphragme pour augmenter la pression du fluide au-delà du niveau initial.

2. Dispositif d'actionnement selon la revendication 1, caractérisé en ce qu'il comprend en outre une deuxième valve (90, 94) dans l'alésage (82) fonctionnant d'une position de fermeture à une position d'ouverture sous l'effet de la pression du fluide dans le circuit de freinage pour autoriser le passage du fluide du circuit dans l'alésage (82).

3. Dispositif d'actionnement selon les revendications 1 ou 2, caractérisé en ce que le piston (102, 46) peut être déplacé au moyen d'une tige de poussée (46) solidaire du diaphragme (42), la première valve (106, 107) étant formée par les surfaces complémentaires (106, 107) respectivement du piston (102) et de la tige de poussée (46).

4. Dispositif d'actionnement selon l'une quelconque des revendications précédentes, caractérisé en ce que le circuit de freinage peut être relié au moyen de l'alésage (82) à un réservoir de fluide à basse pression (110), le passage du fluide au réservoir (110) étant commandé par les première et seconde valves (106, 107; 90, 94).

5. Dispositif d'actionnement selon l'une quelconque des revendications 1 à 4, caractérisé en ce qu'il inclut en outre une valve électromagnétique (32) pour commander de manière réglable les différences de pression sur le diaphragme (42).

6. Dispositif d'actionnement selon l'une quelconque des revendications précédentes, caractérisé en ce qu'il comprend en outre une troisième valve (96, 98) dans l'alésage (82) et pouvant occuper une position de fermeture ou d'ouverture sous l'effet de la pression du fluide dans l'alésage (82) pour permettre le passage du fluide de l'alésage (82) au circuit de freinage.

7. Dispositif d'actionnement selon l'une quelconque des revendications 1 à 6, caractérisé en ce que le moyen déterminant des différences de pression sur le diaphragme (42) est constitué par une source de vide et la pression atmosphérique.

8. Système anti-blocage de freinage pour un véhicule comprenant un dispositif bifluide d'actionnement de freinage tel que revendiqué dans l'une quelconque des revendications 1 à 7, comprenant en outre des moyens capteurs (22, 26) pour indiquer la vitesse de rotation de la roue du véhicule, un processeur électronique et des moyens de commande (28, 30) reliés aux moyens capteurs (22, 26), une valve électromagnétique (18) insérée sur le passage du fluide entre un générateur de pression de fluide (10) et un frein de véhicule (20) et pouvant être actionné par le processeur et le dispositif de commande (28, 30) pour interrompre sélectivement le passage du fluide entre le frein (20) et le générateur (10) et ouvrir un passage de fluide entre le frein (20) et le dispositif de commande du frein.